# DEMANDE DE BREVET EUROPEEN

(11) **EP 0 801 124 A1**
(43) Date de publication de la demande: **15.10.1997**
(21) Numéro de dépôt: 97400818.7
(22) Date de dépôt: 10.04.1997
(51) Int. Cl.: C09K 17/44

(54) **Coulis pour injection dans des sols fins et compositions pour la réalisation de ce coulis**

(30) Priorité: 11.04.1996 FR 9604516
(71) Demandeur: COMPAGNIE DU SOL, 92000 Nanterre (FR)
(72) Inventeur: Gouvenot, Daniel, 92110 Clichy (FR); Vattement, Hubert, 77130 Montereau (FR); Benhamou, Olivia, 92100 Boulogne-Billancourt (FR); Charron, Christophe, 59690 Vieux Conde (FR)
(74) Mandataire: Dronne, Guy

(57) **Abrégé**

L'invention concerne une composition sèche pour la préparation d'un coulis de ciment destiné à être injecté dans des sols fins.

Cette composition est constituée par un mélange intime pulvérulent de charges ne réagissant pas avec l'eau, de ciment et de défloculant, les poudres de charges et de ciment ayant une granulométrie comprise entre 10 et 40µ.

## Description

La présente invention a pour objet un coulis destiné à être injecté dans des sols fins dans le but de les rendre étanches et/ou de les consolider.

Les coulis qui sont actuellement utilisés sont obtenus en réalisant une boue constituée par un mélange d'eau et de charge à grains très fins qui peut être facilement stocké sur le chantier.

On ajoute ensuite à cette boue du ciment pulvérulent, puis un défloculant liquide. On obtient après mélange un coulis qui doit être rapidement injecté dans le sol.

Il est connu que l'addition du défloculant ne peut se faire qu'après hydratation du ciment, ce qui explique que lors de la préparation du coulis, il doit toujours être introduit en dernier.

Ce procédé présente l'inconvénient qu'avant l'adjonction du défloculant, les grains de charge et surtout de ciment forment des agglomérats qui sont assez difficilement désagrégés par le défloculant liquide d'autant plus que sa densité est supérieure à celle de l'eau, ce qui rend difficile l'obtention d'un mélange homogène.

De surcroît, l'action du défloculant qui est déjà réduite par la grande quantité d'eau présente dans le mélange est d'autant plus réduite qu'il est introduit dans le coulis moins rapidement après l'introduction du ciment.

On sait en effet que dans un coulis traditionnel, le poids de l'eau est de l'ordre de 2,5 fois le poids des matières sèches, alors que pour des bétons, ce rapport est de 1/10.

La présente invention est relative à une composition pour la préparation d'un coulis qui évite les inco nvénients précités et à un coulis obtenu à l'aide de cette préparation.

La présente invention a pour objet une composition sèche pour la préparation d'un coulis de ciment destiné à être injecté dans des sols fins caractérisée par le fait qu'elle est constituée par un mélange intime pulvérulent de charges ne réagissant pas avec l'eau, de ciment et de défloculant, les poudres de charges et de ciment ayant une granulométrie comprise entre 10 et 40 µ.

Par charges ne réagissant pas avec l'eau, il convient d'entendre selon l'invention des poudres de minéraux telles que des poudres de calcite ou de dolomie qui ne gonflent pas lorsqu'elles sont mélangées à de l'eau.

Par contre, la bentonite ainsi que d'autres types d'argile sont des produits qui réagissent avec l'eau en donnant un gonflement important et qui ne peuvent pas convenir pour mettre en oeuvre la présente invention.

Conformément à l'invention, les poudres de ciment et de charges ont une granulométrie avantageusement comprise entre 10 et 20 µ.

Selon un mode de réalisation préféré de l'invention, on utilise comme défloculant en poudre un dérivé du naphtalène ou de la mélamine.

Selon l'invention, il est également possible d'ajouter d'autres ingrédients à la composition tels qu'un accélérateur de prise constitué par exemple par une poudre de silicate.

La proportion pondérale de ciment dans la composition pulvérulente peut être comprise entre 10 et 50 % et de préférence entre 20 et 40 %.

La proportion pondérale de la charge peut être comprise entre 50 et 90 % et de préférence entre 60 et 80 %.

La proportion pondérale du défloculant en poudre peut être comprise entre 0,5 et 7 % du poids de ciment.

Selon les besoins, un accélérateur de prise pulvérulent peut être ajouté à raison par exemple de 0,5 à 10 % du poids de ciment.

Conformément à l'invention, le mélange pulvérulent qui vient d'être décrit peut être préparé en usine et stocké pendant une longue période dans des conditionnements étanches dans lesquels il est livré sur chantier.

Au moment où l'on désire réaliser l'injection, il suffit d'ajouter la quantité d'eau nécessaire au mélange de poudre pour obtenir un coulis particulièrement fin et sans agglomération de grains, qui par injection imprègne facilement les sols les plus fins.

Le coulis obtenu selon l'invention est dans la pratique plus efficace car il comporte statistiquement des grains plus fins que les coulis précédemment connus.

De surcroît, le fait que la composition pulvérulente est réalisée en usine assure un dosage correct et constant de tous les constituants du coulis utilisé sans que l'on ait à redouter l'agglomération des grains de ciment et de charge avant l'introduction du défloculant.

D'après les essais qui ont été faits par la demanderesse, il semble que le défloculant solide qui se trouve uniformément réparti dans la composition pulvérulente agit en fait comme antifloculant dès l'instant où la composition pulvérulente est mélangée à l'eau pour constituer le coulis, alors que dans le procédé traditionnel de fabrication des coulis, les poudres de ciment et de charge commencent à floculer avant que l'on ait pu ajouter le défloculant liquide, ce qui limite l'efficacité de ce dernier.

Cet inconvénient du procédé traditionnel est d'autant plus marqué que l'on laisse davantage de temps s'écouler entre l'introduction du ciment et celle du défloculant.

Dans le but de mieux faire comprendre l'invention, on va en décrire maintenant à titre d'illustration et sans aucun caractère limitatif quelques exemples de mise en oeuvre.

### Exemple 1

On réalise en usine le mélange pulvérulent suivant
- ciment fin de granulométrie de 10 à 12 µ 37 %
- calcite broyée de granulométrie de 10 à 12 µ 61,4 %
- défloculant en poudre pour produits à base de ciment ultrafin 1,4 %

Les proportions indiquées sont pondérales.

Ces poudres sont mélangées et conservées en sacs à l'abri de l'humidité puis livrées sur chantier.

On réalise alors le coulis d'injection en mélangeant 400 kg de cette composition pulvérulente à 1 000 l d'eau.

Le temps de rigidification du coulis est de 2 heures 30.

Le coulis est injecté dans un sable de perméabilité 10⁻⁴m/s. Après 7 jours, il donne au terrain une résistance mécanique de 2 à 2,5 MPa et une perméabilité de 10⁻⁸ m/s.

### Exemple 2

On réalise en usine le mélange pulvérulent suivant
- ciment fin de granulométrie de 10 à 12 µ 25 %
- poudre de calcite de granulométrie de 10 à 12 µ 73,6 %
- défloculant en poudre 1,4 %

Les proportions indiquées sont pondérales.

Le mélange ainsi obtenu est conditionné en sacs étanches pour être stocké et livré sur chantier.

On réalise sur le site un coulis d'injection en mélangeant 1 000 l d'eau à 400 kg de mélange pulvérulent.

Le coulis est injecté dans un sable de perméabilité 10⁻⁴ m/s. Après 7 jours, il confère au terrain une résistance mécanique comprise entre 1 et 1,5 MPa et une perméabilité de 10⁻⁸ m/s.

### Exemple 3

On réalise en usine le mélange de poudres suivant
- ciment fin de granulométrie de 10 à 12 µ 37 %
- poudre de dolomite de granulométrie de 10 à 12 µ 60 %
- défloculant en poudre 1,4 %
- silicate en poudre 1,6 %

Les proportions indiquées sont pondérales.

Le produit pulvérulent ainsi obtenu est mis en sacs puis livré sur chantier.

On réalise sur le site un coulis d'injection en mélangeant 300 kg de la composition pulvérulente à 1 000 l d'eau.

Le temps de rigidification du coulis obtenu est de 1 heure.

Ce coulis est injecté dans un sable de perméabilité 10⁻⁴ m/s. Après 7 jours, il confère au terrain une résistance mécanique de 2 à 2,5 MPa et une perméabilité de 10⁻⁸ m/s.

Il est bien entendu que les modes de réalisation qui ont été décrits ne présentent aucun caractère limitatif et qu'ils pourront recevoir toutes modifications désirables sans sortir pour cela du cadre de l'invention.

## Revendications

1. Composition sèche pour la préparation d'un coulis de ciment destiné à être injecté dans des sols fins, caractérisée par le fait qu'elle est constituée par un mélange intime pulvérulent de charges ne réagissant pas avec l'eau, de ciment et de défloculant, les poudres de charges et de ciment ayant une granulométrie comprise entre 10 et 40 µ.

2. Composition selon la revendication 1, caractérisée par le fait que les poudres de ciment et de charges ont une granulométrie comprise entre 10 et 20 µ.

3. Composition selon l'une quelconque des revendications précédentes, caractérisée par le fait que le défloculant en poudre est un dérivé du naphtalène ou de la mélamine.

4. Composition selon l'une quelconque des revendications précédentes, caractérisée par le fait qu'elle comporte également un accélérateur de prise constitué par exemple par une poudre de silicate.

5. Composition selon la revendication 4, caractérisée par le fait que l'accélérateur de prise est présent dans une proportion de 0,5 à 10 % en poids de ciment.

6. Composition selon l'une quelconque des revendications précédentes, caractérisée par le fait qu'elle contient de 10 à 50 % et de préférence de 20 à 40 % en poids de ciment.

7. Composition selon l'une quelconque des revendications précédentes, caractérisée par le fait qu'elle contient de 50 à 90 % et de préférence entre 60 et 80 % en poids de charge.

8. Composition selon l'une quelconque des revendications précédentes, caractérisée par le fait qu'elle contient une proportion pondérale de défloculant en poudre qui est comprise entre 0,5 et 7 % en poids de ciment.

9. Coulis destiné à être injecté dans les sols fins obtenu en incorporant dans de l'eau la composition selon l'une quelconque des revendications 1 à 8, caractérisé par le fait qu'il présente une faible granulométrie et que les grains de ciment et/ou de charges ne forment pratiquement pas d'agglomérats.
